# EUROPÄISCHE PATENTSCHRIFT

(11) **EP 0 691 541 B1**
(45) Veröffentlichungstag und Bekanntmachung des Hinweises auf die Patenterteilung: **10.04.2002**
(21) Anmeldenummer: 95110375.3
(22) Anmeldetag: 04.07.1995
(51) Int. Cl.: G01N 35/10, B03C 1/28

(54) **Verfahren zum Abscheiden von magnetischen Mikropartikeln**
Method of separating magnetic particles
Méthode pour la séparation de particules magnétiques

(30) Priorität: 07.07.1994 DE 4423878
(43) Veröffentlichungstag der Anmeldung: 10.01.1996
(73) Patentinhaber: Roche Diagnostics GmbH, 68298 Mannheim (DE)
(72) Erfinder: Schmitt, Urban, D-82386 Oberhausen (DE); Maurer, Eberhard, Dr., D-82362 Weilheim (DE); Pappert, Gunter, Dr., D-82319 Starnberg (DE)

(56) Entgegenhaltungen:
- EP-A- 0 272 915
- EP-A- 0 339 980
- EP-A- 0 687 501
- WO-A-93/13400
- WO-A-95/00247
- US-A- 4 292 920

## Beschreibung

Die vorliegende Erfindung betrifft ein Verfahren zum Abscheiden von magnetischen Mikropartikeln aus einer Suspension von magnetischen Mikropartikeln in einer Flüssigkeit durch ein magnetisches Feld.

Eine Abscheidung von magnetischen Mikropartikeln wird vor allem für Immunoassays und bei DNA-Tests eingesetzt. Eine Durchführung immunologischer Reaktionen auf der Oberfläche beschichteter, magnetischer Partikel ermöglicht eine einfache Trennung von gebundenen und freien Reaktionspartnern, da die magnetischen Partikel durch magnetische Kräfte festgehalten werden und die restliche Reaktionslösung entfernt werden kann.

Im Stand der Technik wird die Abscheidung von beschichteten, magnetischen Partikeln bereits für die Durchführung von Immunoassays genutzt. In der europäischen Patentanmeldung EP A 0 339 980 wird eine Apparatur (Figuren 10 und 11) beschrieben, mit der eine Suspension von magnetischen Mikropartikeln durch ein Magnetfeld getrennt und die Partikel auf einem Spezialdraht abgeschieden werden, der sich im Inneren des Reaktionsgefäßes befindet. Um die Mikropartikel von dem Draht zu lösen, wird dieser Vibrationen ausgesetzt. Die Apparatur weist den Nachteil auf, daß sehr hohe Magnetfelder zur Verfügung gestellt werden müssen und außerdem ein Rüttler notwendig ist. Das beschriebene Gerät ist nur schwer in bestehende Gerätekonzepte zu integrieren, da weder starke Magneten, noch Rüttler oder die beschriebenen Spezialdrähte in herkömmlichen Analysegeräten vorhanden sind.

Im Stand der Technik gemäß Artikel 54(3) und (4) EPÜ sind weiterhin die Dokumente EP A 0 687 501 und WO 95/00247 bekannt, die eine Separation von magnetischen Mikropartikeln an der Innenwandung von Pipetten beschreiben.

Aufgabe der Erfindung war es, ein Verfahren zum Abscheiden und Waschen von magnetischen Mikopartikeln zur Verfügung zu stellen, das in bestehende Gerätekonzepte mit geringem Aufwand integriert werden kann und für das wenige Vorrichtungen notwendig sind.

Die Aufgabe wurde durch Verfahren gemäß den Ansprüchen 1 und 6 gelöst.

Viele immunologische Assays konnten durch die Einführung von beschichteten magnetischen Mikropartikeln vereinfacht werden. Die magnetischen Mikropartikel nehmen bei diesen Prozessen die Funktion einer Festphase ein. Der Einsatz von magnetischen Mikropartikeln ist dann vorteilhaft, wenn in dem durchzuführenden Test eine Trennung von gebundenen und ungebundenen Reaktionspartnern notwendig ist. Da die Durchführung immunologischer Tests mit magnetischen Mikropartikeln im Stand der Technik bekannt ist (z. B. US 4,219,335), wird an dieser Stelle nicht näher auf den chemischen bzw. immunologischen Aspekt eingegangen.

Unter magnetischen Mikropartikeln sollen solche Mikropartikel verstanden werden, die durch ein magnetisches Feld angezogen werden. Die Mikropartikel können demnach selbst eine Magnetisierung besitzen. Bevorzugt sind jedoch solche Materialien, die eine möglichst kleine Remanenz aufweisen. Das Material der Mikropartikel kann ein zusammengesetztes Material sein, beispielsweise eine Matrix, die magnetisch anziehbare Teilchen enthält. Bei dem magnetisch anziebaren Material kann es sich beispielsweise um Eisen, Eisenoxide, Nickel-, Kobalt- oder Chromoxid handeln. Ein oder mehrere Teilchen dieses Materials können in einer Matrix eingebettet sein. Die Matrix kann aus einer Vielzahl von Materialien, z. B. organischen oder anorganischen Polymeren bestehen.

Für die vorliegende Erfindung werden beschichtete Mikropartikel eingesetzt. Die Beschichtung kann z. B. aus einem Polymer bestehen, das auf seiner Oberfläche reaktive Gruppen trägt (US-4,454,234) oder mit einer biologisch aktiven Komponente beschichtet ist (US-4,177,253, US-3,933,997). Sowohl die Herstellung von magnetischen Mikropartikeln als auch deren Beschichtung ist im Stand der Technik hinlänglich bekannt (US-4,297,337, DE-A-3014036). Mit biologisch aktiven Gruppen beschichtete Mikropartikel sind ebenfalls im Handel erhältlich, z. B. von den Firmen Dynal Tech und Rhône-Poulenc. Die von diesen Firmen vertriebenen Mikropartikel besitzen den Vorteil, daß sie eine relativ geringe Dichte aufweisen, so daß relativ große Mikropartikel Verwendung finden können. Mit zunehmender Dichte steigt die Sedimentationsgeschwindigkeit der Mikropartikel und der Durchmesser der verwendeten Mikropartikel muß reduziert werden, um eine ungewollte Trennung der Suspension durch die Schwerkraft zu vermeiden. Die Beads der Firma Dynal weisen einen Durchmesser von 2,8 µm bei einer Dichte von etwa 1,3 auf. Mikropartikel der Firma Rhône-Poulenc besitzen einen Durchmesser von 0,5 bis 2 µm bei einer Dichte von ebenfalls 1,3. Werden Beads dieser Firmen in wässrigen Lösungsmitteln suspendiert, so dauert es Stunden, bis eine Trennung durch Einwirkung der Schwerkraft erfolgt. Es können mit diesen Beads daher Analyseprozesse durchgeführt werden, ohne daß zusätzliche Vorrichtungen zum Rütteln oder Ultraschallvorrichtungen notwendig wären, um die Suspension stabil zu halten.

Eine zur Durchführung des erfindungsgemäßen Verfahrens geeignete Apparatur beinhaltet eine Pipette, in die eine Suspension von magnetischen Mikropartikeln aufgenommen werden kann. Pipetten besitzen in der Regel eine zylindrische Gestalt mit jeweils einer Öffnung an den Stirnseiten. Es können auch Pipetten eingesetzt werden, die beispielsweise Bereiche mit rechteckigem Querschnitt enthalten. Entscheidend ist, daß der Pipetteninnenraum vom Magnetfeld durchdrungen werden kann, sofern ein Magnet an die Außenwand der Pipette angelegt wird. Das Pipettenmaterial muß demnach für magnetische Feldlinien durchlässig sein, wobei in der Regel Gläser und Kunststoffe eingesetzt werden. Bevorzugt besteht die Pipette aus einem in der Regel zylindrischen Grundkörper, auf den eine Kunststoffspitze, genannt Tip, anfgesteckt ist. Die in die Pipette aufgenommenen Flüssigkeiten befinden sich innerhalb des Tips, in dem auch die Abtrennung der magnetischen Mikropartikel erfolgen kann. Die Verwendung von Tips bietet den Vorteil, daß sie nach Benutzung verworfen werden können und somit eine Reinigung von evtl. zurückgebliebenen Beads nicht notwendig ist. Der Pipetteninnenraum sollte möglichst keine Nischen oder Kanten besitzen, da dies einen quantitativen Ausstoß von in der Pipette niedergeschlagenen magnetischen Mikropartikeln behindert. Bevorzugt werden für die Pipetten Zylinder mit relativ kleinem Durchmesser, etwa im Bereich von wenigen Millimetern bis zu 2 cm. Pipetten mit über ihrer Länge gleichmäßigem Innendurchmesser sind geeignet, vorteilhaft sind jedoch Pipetten, die an einem ihrer Enden konisch verjüngt sind.

Die Innenwandung einer verwendeten Pipette sollte glatt sein. Es können auch Pipetten eingesetzt werden, deren Innenwandung gleitfähig beschichtet ist, z. B. mit Silanen.

Zur Füllung der Pipette mit Suspensionen und Lösungen wird eine ihrer Öffnungen mit einer Pumpe verbunden. Sowohl die Elemente, um eine Ankoppelung der Pipette an die Pumpe zu erreichen, als auch die Pumpe als solche, sind im Stand der Technik für Analyseautomaten bekannt.

Als Magnet zur Abscheidung der magnetischen Mikropartikel können sowohl elektrische als auch Permanentmagnete verwendet werden. Bevorzugt sind Permanentmagnete, da diese beim Betrieb keine Wärme entwickeln, die eine Analyse stören könnte. Starke Permanentmagnete weisen einen magnetischen Fluß auf, der hinreichend ist, um magnetische Mikropartikel aus einer Suspension abzuscheiden, die eine Schichtdicke von bis zu wenigen Zentimetern aufweist. Die verwendeten Magnete besitzen bevorzugt die Form eines Stabmagneten. Es sind jedoch auch mannigfaltige andere Formgebungen möglich, wobei in der Regel die Form so gewählt wird, daß nur ein magnetischer Pol in die Nähe der Pipette gebracht wird. Die Fläche des Magneten, die in die Nähe der Pipette gebracht wird, sollte in ihrem Querschnitt nicht wesentlich kleiner sein als der Durchmesser der Pipette. Diese Fläche des Magneten kann planar sein, bevorzugt ist jedoch eine konkave Wölbung der Fläche, so daß sich der Magnet der Mantelfläche der Pipette anpaßt. Bevorzugt ist diese konkave Fläche so klein, daß sie weniger als eine Halbseite der Mantelfläche der Pipette umfaßt, da so im Innern der Pipette ein stark inhomogenes Magnetfeld erzeugt wird.

Der Magnet kann fest innerhalb der Apparatur positioniert werden oder aber an einer Vorrichtung befestigt sein, die zu seiner Bewegung im Raum dient. Zur Vereinfachung der Konstruktion ist eine starre Positionierung des Magneten bevorzugt.

Weiterhin ist eine Vorrichtung zur Bewegung der Pipette im Raum vorgesehen. In gängigen Analyseapparaten werden bereits Pipetten verwendet, die sich an einem Roboterarm mit ein oder mehreren Freiheitsgraden befinden. Geeignet für die Durchführung des erfindungsgemäßen Verfahrens sind solche Roboterarme, die sich in ein oder zwei Richtungen parallel zur Grundfläche des Analyseautomaten und senkrecht dazu bewegen können. Außerdem geeignet sind sogenannte Rz-Arme, die eine Rotationsbewegung und eine Bewegung senkrecht zur Grundfläche des Analyseautomaten durchführen.

Die Vorrichtung zur Bewegung der Pipette dient zur Bewegung der Pipette auf den Magneten zu und von diesem weg. Prinzipiell ist eine Bewegung unter der Kontrolle von Abstandssensoren möglich. Aufgrund des hohen Aufwandes ist es bevorzugt, die Bewegung der Pipette so zu programmieren, daß der Abstand zwischen Pipette und Magnet und auch eine später erfolgende Relativbewegung von Pipette und Magnet optimal ist. Auch eine Vorrichtung, bei der der Magnet auf die Pipette zubewegt wird, ist zur Durchführung des erfindungsgemäßen Verfahrens geeignet.

Zur Abscheidung der magnetischen Mikropartikel an der Innenwandung der Pipette ist es nicht notwendig, den Abstand zwischen Magnet und Pipette sehr exakt einzustellen. Je näher jedoch Magnet und Pipette gebracht werden, desto schneller ist mit einer quantitativen Abscheidung zu rechnen.

Die Zeit für eine quantitative Abscheidung kann empirisch aufgrund der Klärung der trüben Suspension ermittelt werden. Für eine Verwendung der Vorrichtung innerhalb eines Analyseautomaten ist es nicht notwendig, die Abscheidungszeit für jeden Vorgang neu zu bestimmen Es ist möglich, für eine gegebene Vorrichtung eine Zeit anzugeben, in der für alle verwendeten Flüssigkeiten eine vollständige Abscheidung erreicht werden kann. Für spezielle Anwendungen ist es natürlich auch möglich, eine Detektierung der Abscheidung vorzunehmen. Dies kann beispielsweise erfolgen, indem der Pipetteninhalt durchstrahlt und die hindurchtretende Strahlungsmenge detektiert wird.

Die Erfindung besteht in einem Verfahren zum Waschen von magnetischen Mikropartikeln mit den Schritten
a) Bereitstellen einer Suspension von magnetischen Mikropartikeln in einer ersten Flüssigkeit,
b) Aufnehmen der Suspension in eine Pipette,
c) Führen der Pipette an einen Magneten oder Führen des Magneten an die Pipette,
d) Ausstoß der ersten Flüssigkeit aus der Pipette,
e) Aufnehmen einer zweiten Flüssigkeit in die Pipette,
f) Aneinander Vorbeibewegen von Pipette und Magnet, beginnend in der Nähe der Flüssigkeitsoberkante innerhalb der Pipette, in Richtung auf die Pipettenspitze, so daß sich die Magnetpartikel in der Pipettenspitze sammeln,
g) Ausstoßen der zweiten Flüssigkeit mit den in ihr suspendierten Mikropartikeln aus der Pipette in ein Auffanggefäß.

Das Waschen von magnetischen Mikropartikeln ist innerhalb eines Analyseablaufes notwendig, wenn ungebundene Reaktionspartner entfernt werden sollen. Außerdem hat es sich herausgestellt, daß beschichtete magnetische Mikropartikel bei ihrer Lagerung Teile der Beschichtung freisetzen. Zur Steigerung der Analysegenauigkeit hat es sich demnach als vorteilhaft erwiesen, die Mikropartikel direkt vor ihrer Verwendung zu waschen, um freigesetzte Teile der Beschichtung zu entfernen.

Magnetische Mikropartikel werden bereits vom Hersteller als Suspension geliefert. Diese Suspensionen besitzen die hydrodynamischen Eigenschaften von Flüssigkeiten und können demnach genauso wie Flüssigkeilen in eine Pipette aufgezogen werden. Dies erfolgt, in dem die offene Pipettenspitze in die Suspension gebracht und über die an der Pipette angeschlossene Pumpe der Innendruck der Pipette vermindert wird. Im Stand der Technik sind Vorrichtungen bekannt, definierte Flüssigkeitsmengen zu pipettieren. Diese Geräte nennen sich Pipettoren oder Diluter. Bevorzug erfolgt die Pipettierung so, daß an der Pipettenspitze eine kleine Luftblase entsteht. Auf diese Weise kann erreicht werden, daß keine Tröpfchen von der Pipette abfallen.

Die mit der Suspension gefüllte Pipette wird zur Abscheidung der Mikropartikel an einen Magneten herangeführt oder der Magnet an die gefüllte Pipette. Bevorzugt wird der Magnet an eine Stelle der Pipettenwand gebracht, die sich wenige Millimeter unter der Flüssigkeitsoberfläche befindet. Ist der Magnet ausreichend stark und erstreckt sich seine Oberfläche weit genug in Richtung auf die Pipettenspitze, so genügt eine Positionierung, um die in der Flüssigkeit suspendierten Mikropartikel abzuscheiden. Erfindungsgemäß wird zusätzlich der Magnet entlang der Pipettenaußenwand in Richtung auf die Pipettenspitze bewegt, um eine vollständige Abscheidung zu gewährleisten.

Nach Abscheidung der Mikropartikel an der Innenwandung der Pipette wird die von Mikropartikeln befreite Flüssigkeit aus der Pipette ausgestoßen. Zum Waschen wird nun eine zweite Flüssigkeit in die Pipette aufgenommen. Dies kann geschehen, während sich der Magnet weiterhin an der Wandung der Pipette befindet oder der Magnet kann zuvor von der Pipette entfernt worden sein. Bei der ersten Vorgehensweise werden die abgeschiedenen magnetischen Mikropartikel durch vorbeiströmende Flüssigkeit gewaschen, während im zweiten Fall eine zumindest teilweise Aufwirbelung der Mikropartikel erfolgt.

Sowohl bei der Flüssigkeit, in der die magnetischen Mikropartikel suspendiert sind, als auch bei der Waschflüssigkeit kann es sich um Wasser oder ein inertes Fluid handeln. Bevorzugt enthalten die Flüssigkeiten Detergenzien, da dies die Waschwirkung steigert. Erstaunlicherweise hat sich gezeigt, daß abgeschiedene Mikropartikel besser in Flüssigkeiten mit Detergenzien resuspendiert und mit solchen Flüssigkeiten auch leichter vollständig aus der Pipette ausgestoßen werden können.

Für einen einfachen Waschprozeß können die Mikropartikel direkt mit der Flüssigkeit ausgestoßen werden. Ist ein weiteres Waschen erforderlich, so können die Mikropartikel nach dem bereits beschriebenen Verfahren in Waschflüssigkeit suspendiert und erneut an der Wandung niedergeschlagen werden.

Die Effizienz eines Waschvorganges wird dadurch beeinflußt, wie vollständig die abgeschiedenen Mikropartikel in der Waschflüssigkeit resuspendiert werden können und ob ein quantitativer Ausstoß der Mikropartikel aus der Pipette möglich ist Es ist daher bevorzugt, abgeschiedene Mikropartikel in der Waschflüssigkeit zu resuspendieren. Dies kann erfolgen, indem der Magnet von der Pipettenspitze entfernt wird bevor die Waschflüssigkeit in die Pipette aufgenommen wird. Die durch Aufwirbelung erfolgende, teilweise Suspension kann unterstützt werden, indem der Magnet von der der Abscheidungsstelle entgegengesetzten Seite an die Pipette herangeführt wird. Auf der Wandung abgeschiedene magnetische Mikropartikel werden so von der Wandung gelöst. Der Magnet darf bei dieser Vorgehensweise nicht zu lange von der entgegengesetzten Seite einwirken, da sonst eine erneute Abscheidung der magnetischen Mikropartikel erfolgt Anstatt den Magneten von der entgegengesetzten Seite an die Pipette heranzuführen, ist es ebenfalls möglich, die Pipette als solche um ihre Längsachse zu drehen. Zur Resuspension abgeschiedener magnetischer Mikropartikel ist es ebenfalls möglich, einen mechanischen Rüttler oder eine Ultraschallvorrichtung zu installieren. Die beschriebenen Verfahren zur Resuspension können auch angewendet werden, um die Mikropartikel mit der Flüssigkeit aus der Pipette auszustoßen. Erfindungsgemäß wird eine Entfernung der Mikropartikel aus der Pipette jedoch dadurch erreicht, daß die Mikropartikel an einer Wandung der Pipette abgeschieden und durch Relativbewegung von Pipette und Magnet in der Pipettenspitze gesammelt werden. Hierzu wird die Pipette in ihrer Längsrichtung von der Oberkante der Flüssigkeit bis zu ihrer Spitze am Magneten vorbeibewegt. Nachfolgend wird die Flüssigkeit aus der Pipette ausgestoßen und spült die in der Pipettenspitze gesammelten Mikropartikel mit.

Zur Erfindung gehört weiterhin ein Verfahren zur Durchführung einer Analyse mit den Schritten Bereitstellung einer Suspension von magnetischen Mikropartikeln in einer ersten Flüssigkeit, Inkubation der Suspension mit einem Analyten, Aufnehmen des Reaktionsgemisches in eine Pipette, Führen der Pipette an einen Magneten oder Führen des Magneten an die Pipette, Ausstoß der flüssigen Phase aus der Pipette, Aufnehmen einer Systemflüssigkeit in die Pipette, Aneinander Vorbeibewegen von Pipette und Magnet, beginnend in der Nähe der Flüssigkeitsoberkante innerhalb der Pipette, in Richtung auf die Pipettenspitze, so daß sich die Magnetpartikel in der Pipettespitze sammeln, Entfernen der Pipette vom Magneten, Ausstoßen der Systemflüssigkeit mit den Mikropartikeln in ein Auffanggefäß und Bestimmung der Analytkonzentration aufgrund spezifischer Eigenschaften der Systemflüssigkeit oder der Mikropartikel.

Die bereits beschriebenen Verfahren zur Abscheidung und Waschung von Mikropartikeln können innerhalb eines Analyseprozesses eingesetzt werden. Die magnetischen Mikropartikel werden hierzu mit einem Analyten. z. B. Blut, Plasma, Serum, Speichel, Gewebsflüssigkeit, Urin inkubiert. Bei der Inkubation bindet der zu bestimmende Inhaltsstoff des Analyten entweder direkt oder über einen Vermittler an die Beschichtung des Mikropartikels. Die möglichen Verfahren zur Durchführung heterogener Immunoassays und auch die Verwendung magnetischer Mikropartikel in diesen Assays ist im Stand der Technik bekannt, so daß an dieser Stelle nicht näher darauf eingegangen wird.

Die folgenden Schritte des Analyseverfahrens verlaufen analog dem Waschvorgang. Im Analyseverfahren wird jedoch statt einer Waschflüssigkeit eine Systemflüssigkeit in die Pipette aufgenommen. Diese Systemflüssigkeit kann Wasser oder eine inerte Flüssigkeit sein, die Detergenzien, Reagenzien oder Hilfsstoffe enthält. Nachdem die Mikropartikel mit der Systemflüssigkeit aus der Pipette ausgestoßen worden sind, reagiert der an den Magnetbeads gebundene Analyt mit einem immunologisch wirksamen Reagenz. Dies kann z. B. ein Antikörper, der eine Markierung (z. B. ein Enzym, Ruthenium-Label) trägt, sein. Der Nachweis der gebundenen Analytmenge erfolgt bevorzugt nach nochmaligem Waschen mit den in der Immunologie üblichen Waschlösungen. Die Detektion des Analyten kann z. B. über eine Farbreaktion erfolgen. Bei einem bevorzugten Verfahren werden die Mikropartikel in einer Meßzelle abgeschieden und hier ein Meßsignal (Farbbildung, Fluoreszenz) erzeugt. Besonders bevorzugt ist die Erzeugung einer Elektrochemilumineszenzreaktion mit den Mikropartikeln, wie dies in der Patentanmeldung WO 89/10551 beschrieben ist.

Die Erfindung wird durch die folgenden Beispiele veranschaulicht und genauer spezifiziert.
- Figur 1:: Vorrichtung zum Abscheiden von magnetischen Mikropartikeln
- Figur 2:: Zeitlicher Verlauf der Abscheidung mit verschiedenen Mikropartikeln
- Figur 3:: Auswirkung der Waschung von Beads auf die Empfindlichkeit eines Immunoassays
- Figur 4a bis 4d:: Vorgehensweisen zur Waschung von Beads

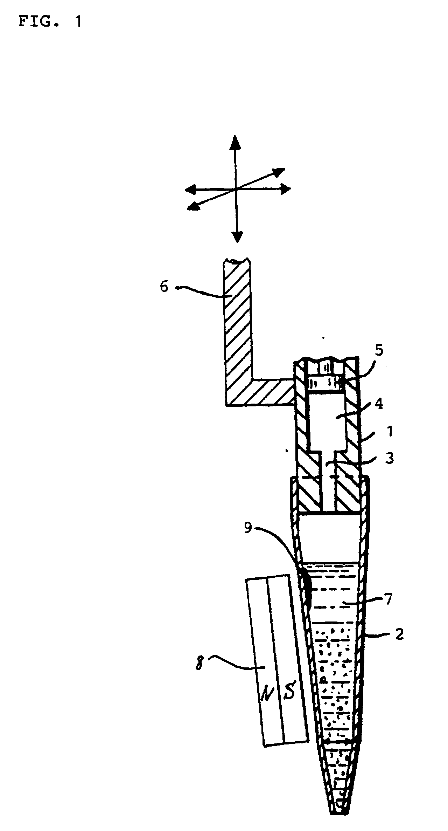

Figur 1 zeigt eine zur Durchführung des erfindungsgemäßen Verfahrens geeignete Vorrichtung zum Abscheiden und zur Waschung von magnetischen Mikropartikeln. Das Pipettenoberteil (1) ist ein zylindrischer Metallkörper, auf den das Pipettenunterteil (2) aufgesteckt ist Das Pipettenunterteil (2) ist ein Kunststoff-Tip der Firma Eppendorf. Ober- und Unterteil der Pipette sind durch einen Kanal (3) miteinander verbunden. Im Pipettenoberteil (1) ist eine Pumpenvorrichtung mit Kolben (5) und Zylinder (4) direkt integriert. Durch eine Bewegung des Kolbens (5) innerhalb des Zylinders (4) kann eine Flüssigkeit (7) in das Pipettenunterteil (2) aufgenommen und aus diesem abgegeben werden. Das Pipettenoberteil (1) ist mechanisch mit einem X, Y, Z-Arm (6) eines Analyseautomaten verbunden. Die Pipette kann demnach in allen drei Raumrichtungen bewegt werden. Figur 1 zeigt ebenfalls einen Magneten (8), der sich in der Nähe einer Außenwandung des Pipettenunterteiles (2) befindet Aus dem oberen Teil der Flüssigkeit (7) sind durch die magnetischen Anziehungskräfte Mikropartikel (9) an der Innenwandung des Pipettenunterteiles (2) abgeschieden worden.

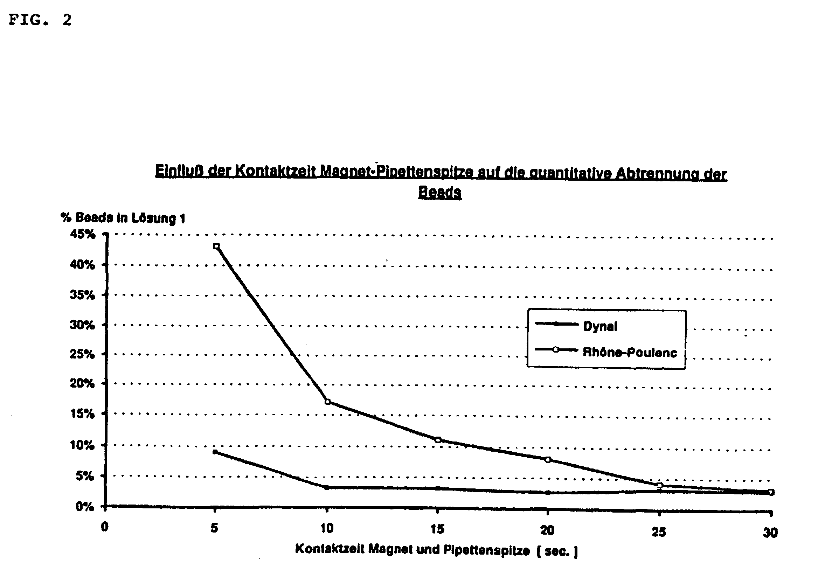

Figur 2 zeigt den zeitlichen Verlauf der Abscheidung verschiedener Mikropartikel in einer Pipette mit einem maximalen Innendurchmesser von 4 mm. Als Magnet wurde ein Stabmagnet mit einer magnetischen Flußdichte von etwa 2 Gauss verwendet. Die Fläche des Magneten, die an die Pipette herangebracht wurde, hatte Ausmaße von 15 mm x 5 mm. Der auf der Y-Achse aufgetragene Anteil von in der Suspension verbliebenen Beads wurde bestimmt, indem der Magnet für eine bestimmte, auf der X-Achse angegebenen Dauer an das Pipettenunterteil herangeführt wurde und nach dieser Zeit die Suspension aus der Pipette ausgestoßen wurde. Die in der Suspension verbliebenen Beads wurden aufgrund einer immunologischen Reaktion nachgewiesen.

Beads der Firma Dynal weisen einen Durchmesser von 2,8 µm auf, während die Mikropartikel der Firma Rhône Poulenc eine Durchmesserverteilung von 0,5 bis 2 µm aufweisen. Aus Figur 2 ist zu erkennen, daß unabhängig von der Sorte verwendeter Beads nach ausreichender Zeit eine annähernd quantitative Abscheidung erreicht werden konnte. Mit Beads der Firma Dynal war die Abscheidung bereits nach etwa 10 Sekunden vollständig.

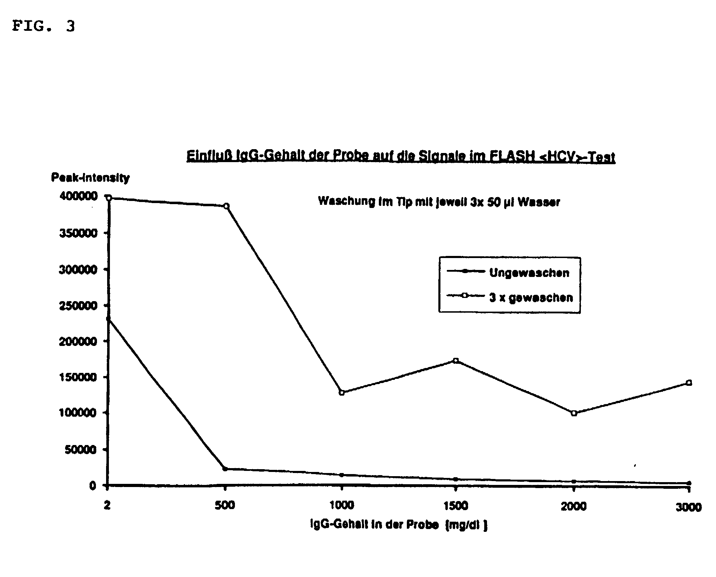

Figur 3 zeigt die Auswirkung von Waschschritten auf die Empfindlichkeit eines Immunoassays. Für den Versuch wurden Beads der Firma Dynal verwendet, die mit Streptavidin beschichtet sind.

Zur Durchführung des Versuches wurden jeweils 50 µl Puffer, die eine Suspension von Dynal Streptavidin Beads (600 µg Beads/ml) enthalten, in einem Reaktionsgefäß vorgelegt Darauf wurden 40 µl Hepatitis C-Virus-Antigene, die mit Biotin gekoppelt sind, zugegeben. Das Gemisch wurde mit 10 µl Probe von Hepatitis C-Virus-haltigem Serum mit unterschiedlichem IgG-Gehalt versetzt und für 25 Minuten bei 37 °C inkubiert.

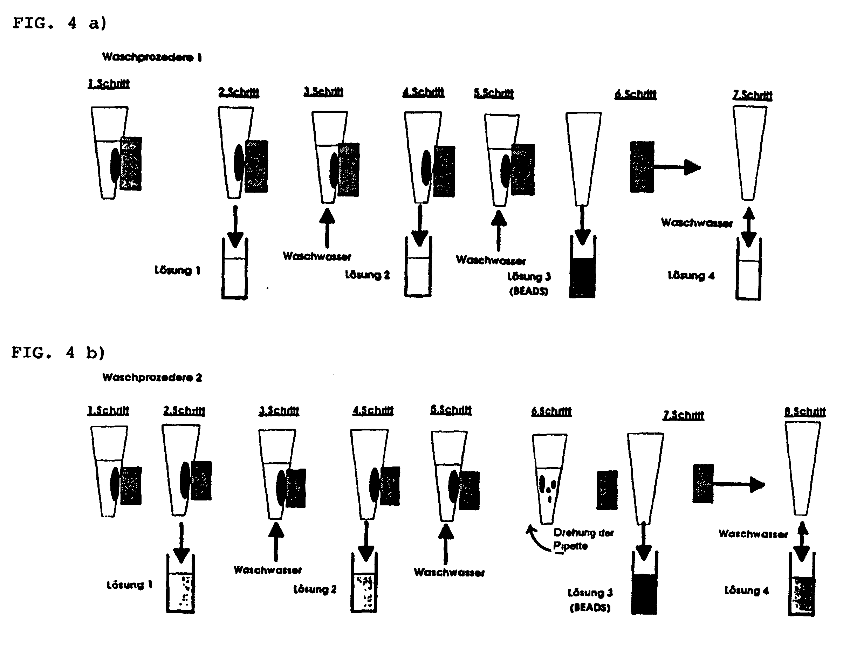

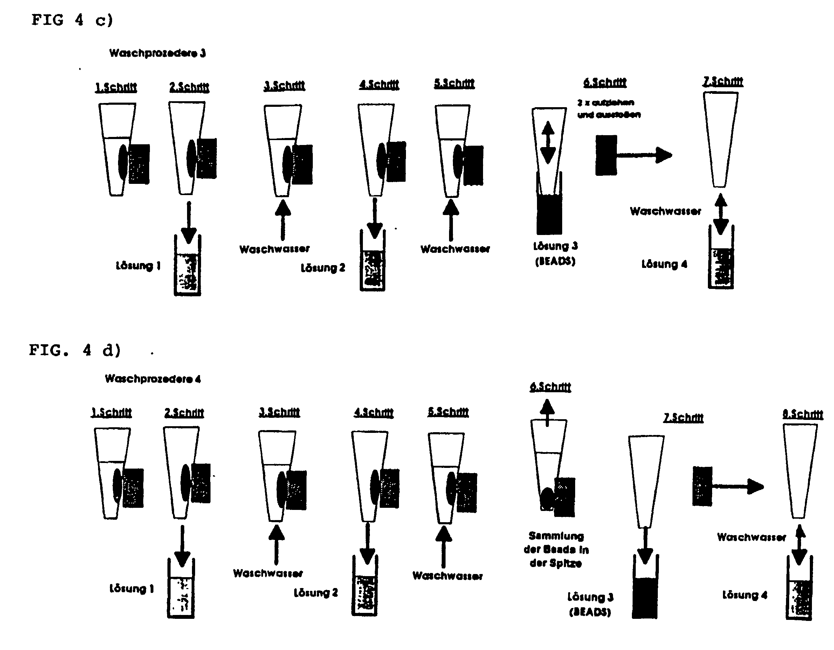

Die Beads wurden nach dem in Figur 4d beschriebenen Verfahren gewaschen. Nach quantitativer Überführung der Beads in ein Reaktionsgefäß wurden 50 µl Puffer und polyklonale Antikörper gegen humanes IgG aus Schaf, markiert mit Ruthenium, zugegeben. Zur Bestimmung der Rutheniummarkierung wurde die Elektrochemilumineszenz mit der in WO 89/10551 beschriebenen Versuchsanordnung gemessen.

Die Figuren 4a bis 4d zeigen mögliche Vorgehensweisen zur Waschung von Beads. Zur Abtrennung der Beads wurde eine Pipette mit einer 100 µl Spitze verwendet. Die Pipette war fest fixiert und ein starker Dauermagnet wurde über eine Schiene immer in einer definierten Höhe an die Wand der Pipettenspitze angelegt. Nach einer Zeit von ca. 5 - 10 sec. waren die Beads quantitativ (>95 %) an der Wand fixiert. Der Überstand wurde verworfen und die Beads konnten durch mehrmaliges Pipettieren von Wasser bzw. Puffer gewaschen werden. Zur quantitativen Überführung der Beads in die Reaktionsgefäße wurden die in den Figuren 4a bis 4d dargestellten Verfahren untersucht. Als besonders vorteilhaft hat sich die in Figur 4d dargestellte erfindungsgemäße Waschprozedur erwiesen. Die Beads werden zunächst aus der in der Pipette enthaltenen Suspension abgeschieden und die Flüssigkeit aus der Pipette ausgestoßen. Während sich der Magnet an der Pipettenwand befindet und somit die Beads festhält, wird Waschwasser in die Pipette aufgenommen. Dieses Waschwasser wird aus der Pipette ausgestoßen und erneut frisches Waschwasser aufgenommen. Die Pipette wird nun langsam nach oben bewegt, so daß die Beads von den Magneten in die Pipettenspitze transportiert werden. Im 7. Schritt wird die Flüssigkeit aus der Pipette ausgestoßen, wobei diese die in der Pipettenspitze befindlichen Beads mitreißt. Nach diesem Schritt wird die Pipette mit Waschwasser nachgespült.

### Bezugszeichenliste

- 1): Pipettenoberteil
- 2): Pipettenunterteil
- 3): Kanal
- 4): Zylinder
- 5): Kolben
- 6): XYZ-Arm
- 7): Flüssigkeit
- 8): Magnet
- 9): Mikropartikel

## Patentansprüche

1. Verfahren zum Waschen von magnetischen Mikropartikeln mit den Schritten
a) Bereitstellen einer Suspension von magnetischen Mikropartikeln in einer ersten Flüssigkeit,
b) Aufnehmen der Suspension in eine Pipette,
c) Führen der Pipette an einen Magneten oder Führen des Magneten an die Pipette,
d) Ausstoß der ersten Flüssigkeit aus der Pipette,
e) Aufnehmen einer zweiten Flüssigkeit in die Pipette,
f) Aneinander Vorbeibewegen von Pipette und Magnet, beginnend in der Nähe der Flüssigkeitsoberkante innerhalb der Pipette, in Richtung auf die Pipettenspitze, so daß sich die Magnetpartikel in der Pipettenspitze sammeln,
g) Entfernen der Pipette vom Magneten,
h) Ausstoßen der zweiten Flüssigkeit mit den Mikropartikeln aus der Pipette in ein Auffanggefäß.

2. Verfahren gemäß Anspruch 1, bei dem vor Schritt e) entweder die Pipette um ihre Längsachse gedreht oder der Magnet von einer Vorrichtung um die Längsachse der Pipette rotiert wird, um eine Resuspension abgeschiedener Partikel zu erzielen.

3. Verfahren gemäß Anspruch 1, bei dem die Pipette aus einer Röhre besteht, auf die ein Tip aufgesteckt ist.

4. Verfahren gemäß Anspruch 1 oder 3, bei dem die Abscheidung der magnetischen Mikropartikel an der Innenwand der Pipette detektiert wird, in dem der Pipetteninhalt durchstrahlt und die hindurchtretende Strahlungsmenge detektiert wird.

5. Verfahren gemäß Anspruch 1, bei dem die Schritte
- Aufnehmen einer Flüssigkeit in die Pipette
- Ausstoßen der Flüssigkeit aus der Pipette
ein- oder mehrmals wiederholt werden, nachdem Schritt d) durchgeführt wurde.

6. Verfahren zur Durchführung einer Analyse mit den Schritten
a) Bereitstellen einer Suspension von magnetischen Mikropartikeln in einer ersten Flüssigkeit,
b) Inkubation der Suspension mit einem Analyten,
c) Aufnehmen des Reaktionsgemisches aus Schritt b) in eine Pipette,
d) Führen der Pipette an einen Magneten oder Führen des Magneten an die Pipette,
e) Ausstoß der flüssigen Phase aus der Pipette,
f) Aufnehmen einer Systemflüssigkeit in die Pipette,
g) Aneinander Vorbeibewegen von Pipette und Magnet, beginnend in der Nähe der Flüssigkeitsoberkante innerhalb der Pipette, in Richtung auf die Pipettenspitze, so daß sich die Magnetpartikel in der Pipettenspitze sammeln,
h) Entfernen der Pipette vom Magneten,
i) Ausstoßen der Systemflüssigkeit mit den Mikropartikeln in ein Auffanggefäß,
j) Bestimmung der Analytkonzentration aufgrund spezifischer Eigenschaften der Systemflüssigkeit oder der Mikropartikel.

7. Verfahren gemäß Anspruch 6, bei dem die Bestimmung der Analytkonzentration in Schritt j) über eine immunologische Reaktion mit einem markierten immunologischen Reagenz erfolgt und die Markierung des immunologischen Reagenz nachgewiesen wird.

8. Verfahren gemäß Anspruch 1 oder 6, bei dem erste und/oder zweite Flüssigkeit Detergenzien enthalten.

## Claims

1. Process for washing magnetic microparticles comprising the steps
a) preparing a suspension of magnetic microparticles in a first liquid,
b) taking up the suspension in a pipette,
c) guiding the pipette to a magnet or guiding the magnet to the pipette,
d) discharging the first liquid from the pipette,
e) taking up a second liquid in the pipette,
f) moving the pipette and magnet past one another starting in the vicinity of the top edge of the liquid inside the pipette and moving towards the pipette tip such that the magnetic particles collect in the pipette tip,
g) removing the pipette from the magnet,
h) discharging the second liquid containing the microparticles from the pipette into a collecting vessel.

2. Process as claimed in claim 1, in which before step e), either the pipette is rotated about its longitudinal axis or the magnet is rotated by a device around the longitudinal axis of the pipette in order to resuspend deposited particles.

3. Process as claimed in claim 1, in which the pipette consists of a tube on which a tip is attached.

4. Process as claimed in claims 1 or 3, in which the deposition of the magnetic microparticles on the inner wall of the pipette is detected by irradiating the contents of the pipette and detecting the amount of radiation that passes through.

5. Process as claimed in claim 1, in which the steps
- taking up a liquid in the pipette
- discharging the liquid from the pipette
are repeated once or several times after step d) has been carried out.

6. Process for carrying out an analysis comprising the steps
a) preparing a suspension of magnetic microparticles in a first liquid,
b) incubating the suspension with an analyte,
c) taking up the reaction mixture from step b) in a pipette,
d) guiding the pipette to a magnet or guiding the magnet to the pipette,
e) discharging the liquid phase from the pipette,
f) taking up a system liquid into the pipette,
g) moving the pipette and magnet past one another starting in the vicinity of the top edge of the liquid inside the pipette and moving towards the pipette tip such that the magnetic particles collect in the pipette tip,
h) removing the pipette from the magnet,
i) discharging the system liquid containing the microparticles into a collecting vessel,
j) determining the analyte concentration on the basis of specific properties of the system liquid or the microparticles.

7. Process as claimed in claim 6 in which the analyte concentration is determined in step j) by means of an immunological reaction using a labelled immunological reagent and the label of the immunological reagent is detected.

8. Process as claimed in claim 1 or 6, in which the first and/or second liquid contains detergents.

## Revendications

1. Procédé pour le lavage de microparticules magnétiques comprenant les étapes :
a) préparation d'une suspension de microparticules magnétiques dans un premier liquide,
b) prise de la suspension dans une pipette,
c) amenée de la pipette à un aimant ou amenée de l'aimant à la pipette,
d) éjection du premier liquide de la pipette,
e) prise d'un deuxième liquide dans la pipette,
f) déplacement alterné de la pipette et de l'aimant, commençant à proximité du bord supérieur du liquide à l'intérieur de la pipette, en direction de la pointe de la pipette, de sorte que les particules magnétiques s'accumulent dans la pointe de la pipette,
g) écartement de la pipette de l'aimant,
h) éjection du deuxième liquide contenant les microparticules de la-pipette dans un récipient collecteur.

2. Procédé selon la revendication 1, dans laquelle avant l'étape e) soit la pipette est tournée autour de son axe longitudinal, soit l'aimant est pivoté autour de l'axe longitudinal de la pipette au moyen d'un dispositif, afin d'obtenir une resuspension des particules séparées.

3. Procédé selon la revendication 1, dans laquelle la pipette est composée d'un tube sur lequel une pointe est emboîtée.

4. Procédé selon la revendication 1 ou 3, dans laquelle la séparation des microparticules magnétiques est détectée à la paroi intérieure de la pipette, par radiographie du contenu de la pipette et détection de la quantité de rayonnement pénétrant dans celle-ci.

5. Procédé selon la revendication 1, dans laquelle les étapes
- prise d'un liquide dans la pipette
- éjection du liquide de la pipette
sont répétées à une ou plusieurs reprises après avoir effectué l'étape d).

6. Procédé de réalisation d'une analyse comprenant les étapes
a) préparation d'une suspension de microparticules magnétiques dans un premier liquide,
b) incubation de la suspension avec un analyte,
c) prise du mélange de réaction de l'étape b) dans une pipette,
d) amenée de la pipette à un aimant ou amenée de l'aimant à la pipette,
e) éjection de la phase liquide de la pipette,
f) prise d'un liquide systémique dans la pipette,
g) déplacement alterné de la pipette et de l'aimant, commençant à proximité du bord supérieur de liquide à l'intérieur de la pipette, en direction de la pointe de la pipette, de sorte que les particules magnétiques s'accumulent dans la pointe de la pipette,
h) écartement de la pipette de l'aimant,
i) éjection du liquide systémique contenant les microparticules dans un récipient collecteur,
j) détermination de la concentration d'analytes en raison des propriétés spécifiques du liquide systémique ou des microparticules.

7. Procédé selon la revendication 6, dans laquelle la détermination de la concentration d'analytes à l'étape j) s'effectue par réaction immunologique au moyen d'un réactif immunologique marqué et le marquage du réactif immunologique est établi.

8. Procédé selon la revendication 1 ou 6 dans laquelle le premier ou le second liquide contiennent des détergents.
